# EUROPEAN PATENT APPLICATION

(11) **EP 4 697 420 A1**
(43) Date of publication of application: **18.02.2026**
(21) Application number: 25192053.4
(22) Date of filing: 28.07.2025
(51) Int. Cl.: H01M 10/04, H01M 10/058, H01M 50/403

(54) **JELLY ROLL WINDING UNIT AND WINDING METHOD FOR SECONDARY BATTERY**

(30) Priority: 05.08.2024 KR 20240103774
(71) Applicant: Hana Technology Co., Ltd., Gyeonggi-do 17118 (KR)
(72) Inventor: JEONG, Jeong Seok, 16691 Suwon-si, Gyeonggi-do (KR); SHIN, Young II, 15237 Ansan-si, Gyeonggi-do (KR)
(74) Representative: Stöckeler, Ferdinand

(57) **Abstract**

Proposed are a jelly roll winding unit (1) and winding method for a secondary battery and, more particularly, to a jelly roll winding unit (1) and winding method for a secondary battery seeking to prevent sagging in the width direction by constantly supporting the bottom of a jelly roll (J) during the work of wrapping the jelly roll (J) with a separator (B) and easily guides the folding line of the separator (B) as needed.

## Description

### CROSS REFERENCE TO RELATED APPLICATION

The present application claims priority to Korean Patent Application No. 10-2024-0103774, filed August 05, 2024, the entire contents of which is incorporated herein for all purposes by this reference.

### BACKGROUND OF THE INVENTION

### Field of the Invention

The present disclosure relates to a jelly roll winding unit and winding method for a secondary battery and, more particularly, to a jelly roll winding unit and winding method for a secondary battery seeking to prevent sagging in the width direction by constantly supporting the bottom of a jelly roll during the work of wrapping the jelly roll with a separator and easily guides the folding line of the separator as needed.

### Description of the Related Art

Recently, as the development of electric vehicles, energy storage batteries, robots, and satellites has begun in earnest, research on secondary batteries, which are high-performance batteries that can be charged and discharged repeatedly, is actively underway. Commercialized secondary batteries at present include nickel-cadmium batteries, nickel-hydrogen batteries, nickel-zinc batteries, and lithium-ion secondary batteries. Among these, lithium-ion secondary batteries are in the spotlight due to their advantages of having a very low self-discharge rate and higher energy density, and being safe to partially charge and discharge as there is almost no memory effect compared to nickel-based secondary batteries.

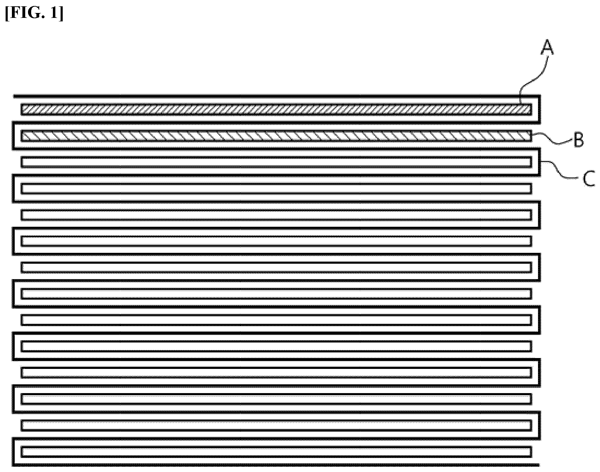

A secondary battery is composed of a positive electrode plate, a separator, and a negative electrode plate sequentially stacked and immersed in an electrolyte. To manufacture the internal cell stack of a secondary battery like the above, a stacking process is performed to create a jelly roll by cross-stacking a negative electrode plate A, a separator B, a positive electrode plate C, and a separator B as shown in FIG. 1.

After the stacking process, a winding process is employed to wrap the outer surface of the jelly roll with a separator B.

The inventors of the present disclosure propose a novel jelly roll winding unit and winding method for a secondary battery for preventing sagging of a jellyroll along the width direction during a winding process.

### Documents of Related Art

(Patent Document 0001) Korean Patent No. 10-0509696 "JELLY-ROLL TYPE BATTERY UNIT, WINDING METHOD THEREOF AND LITHIUM SECONDARY BATTERY MANUFACTURED USING THE SAME"

### SUMMARY OF THE INVENTION

The present disclosure has been made to solve the problems of the related art, and an objective of the present disclosure is to provide a jelly roll winding unit and winding method for a secondary battery for preventing sagging in the width direction by constantly supporting the bottom of a jelly roll during the work of wrapping the jelly roll with a separator.

In addition, an objective of the present disclosure is to provide a jelly roll winding unit and winding method for a secondary battery in which a first gripper and a second gripper are configured to be able to move forward and backward, thereby preventing the first gripper and the second gripper from interfering with a separator during the process in which the separator wraps a jelly roll.

In addition, an objective of the present disclosure is to provide a jelly roll winding unit and winding method for a secondary battery in which a first gripper and a second gripper are configured to be rotatable, thereby allowing a separator to naturally wrap a jelly roll by 360° rotation.

In addition, an objective of the present disclosure is to provide a jelly roll winding unit and winding method for a secondary battery for preventing a jelly roll from being twisted, etc., by providing an edge gripper that grips the edge side of the jelly roll.

In addition, an objective of the present disclosure is to provide a jelly roll winding unit and winding method for a secondary battery in which a pair of edge grippers gripping the edge side of a jelly roll are spaced apart from each other along the width direction of the jelly roll, thereby facilitating the formation of a folding line of a separator.

In addition, an objective of the present disclosure is to provide a jelly roll winding unit and winding method for a secondary battery for preventing sagging of a first gripper and a second gripper by providing a clamp part that supports the end sides of the first and second grippers in the form of an outer arm.

In addition, an objective of the present disclosure is to provide a jelly roll winding unit and winding method for a secondary battery for enabling easy tension control for a separator by providing a tension control part.

In addition, an objective of the present disclosure is to provide a jelly roll winding unit and winding method for a secondary battery for enabling easy tension control for a separator by having a moving guide part guide the movement of a body part in the y-axis direction.

In addition, an objective of the present disclosure is to provide a jelly roll winding unit and winding method for a secondary battery for enabling precise cutting work by pressing the upper surface of a separator by a vacuum suction part and a pressing surface part during cutting of the separator.

The present disclosure may be implemented by an embodiment having the following configuration to achieve the above-described objectives.

According to an embodiment of the present disclosure, there is provided a jelly roll winding unit for a secondary battery, the unit including: a main gripper part configured to be rotatable while pressing opposite sides of a jelly roll being fed; and an edge gripper configured to grip an edge side of the jelly roll fixed by the main gripper part, wherein the main gripper part may include: a first gripper configured to press a first side of the jelly roll and to be able to move forward and backward along a width direction of the jelly roll; and a second gripper configured to press a second side of the jelly roll and to be able to move forward and backward along the width direction of the jelly roll.

According to another embodiment of the present disclosure, in the jelly roll winding unit for a secondary battery, the main gripper part may further include: a first rotation member connected to the first gripper and the second gripper and configured to rotate the first gripper and the second gripper; and a first driving device connected to the first gripper and the second gripper and configured to move the first gripper and/or the second gripper forward and backward in a width direction.

According to still another embodiment of the present disclosure, in the jelly roll winding unit for a secondary battery, the jelly roll may be constantly supported at a bottom thereof by the first gripper or the second gripper when a rotation is completed by the main gripper part.

According to still another embodiment of the present disclosure, in the jelly roll winding unit for a secondary battery, the edge gripper may grip an edge of the jelly roll after a rotational motion of the first gripper and the second gripper.

According to still another embodiment of the present disclosure, in the jelly roll winding unit for a secondary battery, the edge gripper may include a pair of pressing parts spaced apart from each other along a horizontal direction, wherein the pressing parts may grip edge sides of the jelly roll fixed by the main gripper part, and may guide a folding line of a separator wrapping the jelly roll.

According to still another embodiment of the present disclosure, in the jelly roll winding unit for a secondary battery, one of the first gripper and the second gripper may move outward from the jelly roll after the edge gripper grips the jellyroll.

According to still another embodiment of the present disclosure, the jelly roll winding unit for a secondary battery may further include a clamp part connected to end sides of the first gripper and the second gripper and configured to support the first gripper and the second gripper.

According to still another embodiment of the present disclosure, in the jelly roll winding unit for a secondary battery, the clamp part may include: a pair of support members supporting the end sides of the first gripper and the second gripper; a second driving device configured to allow individual support members to be raised and lowered; and a second rotation member configured to rotate the first gripper and the second gripper.

According to still another embodiment of the present disclosure, the jelly roll winding unit for a secondary battery may further include a tension control part configured to control a tension of a separator extending from the jelly roll while being separated from the main gripper part and fixing a side of the separator.

According to still another embodiment of the present disclosure, in the jelly roll winding unit for a secondary battery, the tension control part may include: a movement guide part configured to extend in a longitudinal direction orthogonal to the width direction on a horizontal plane, and guide a longitudinal movement of a body part; the body part configured to move in the longitudinal direction by being combined with the movement guide part; a vacuum suction part connected to the body part, and configured to be raised and lowered, and vacuum-suck an upper surface of a separator being fed; and a cutter configured to cut the separator sucked by the vacuum suction part and to be raised and lowered.

According to still another embodiment of the present disclosure, in the jelly roll winding unit for a secondary battery, the movement guide part may guide the movement of the body part to control the tension of the separator.

According to still another embodiment of the present disclosure, in the jelly roll winding unit for a secondary battery, the tension control part may further include a pressing surface part configured to press an upper surface of a separator being fed while being spaced apart from the vacuum suction part, wherein the cutter may be disposed between the vacuum suction part and the pressing surface part.

According to an embodiment of the present disclosure, there is provided a jelly roll winding method for a secondary battery, the method including: pressing and fixing opposite sides of a jelly roll being fed using the first gripper located above and the second gripper located below; rotating the first gripper and the second gripper; gripping an edge side of the jelly roll using the edge gripper; and moving the second gripper backward.

According to another embodiment of the present disclosure, the jelly roll winding method for a secondary battery may further include: pressing and fixing, by the second gripper moving forward, an upper surface of the jelly roll, which is wrapped by an extension separator; releasing, by the edge gripper, a grip on the jelly roll edge side; rotating the first gripper and the second gripper; and re-gripping, by the edge gripper, the edge side of the jelly roll.

According to still another embodiment of the present disclosure, the jelly roll winding method for a secondary battery may further include moving the first gripper backward after re-gripping by the edge gripper.

The present disclosure has the following effects by the above configurations.

According to the present disclosure, by constantly supporting the bottom of a jelly roll during the work of wrapping the jelly roll with a separator, sagging in the width direction can be prevented.

In addition, according to the present disclosure, by configuring a first gripper and a second gripper to be able to move forward and backward, it is possible to prevent the first gripper and the second gripper from interfering with a separator during the process in which the separator wraps a jelly roll.

In addition, according to the present disclosure, by configuring a first gripper and a second gripper to be rotatable, it is possible for a separator to naturally wrap a jelly roll by 360° rotation.

In addition, according to the present disclosure, by providing an edge gripper that grips the edge side of a jelly roll, it is possible to prevent the jelly roll from being twisted, etc.

In addition, according to the present disclosure, by making a pair of edge grippers gripping the edge side of a jelly roll spaced apart from each other along the width direction of the jelly roll, the formation of a folding line of a separator can be facilitated.

In addition, according to the present disclosure, by providing a clamp part that supports the end sides of first and second grippers in the form of an outer arm, it is possible to prevent sagging of the first gripper and the second gripper.

In addition, according to the present disclosure, by providing a tension control part, easy tension control for a separator is possible.

In addition, according to the present disclosure, by having a moving guide part guide the movement of a body part in the y-axis direction, easy tension control for a separator is possible.

In addition, according to the present disclosure, by pressing the upper surface of a separator by a vacuum suction part and a pressing surface part during cutting of the separator, precise cutting work is possible.

Meanwhile, it should be added that even if effects are not explicitly mentioned herein, the effects described in the following specification expected by the technical features of the present disclosure and their potential effects are treated as if they were described in the specification of the present disclosure.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a schematic view showing the inner stack of a jelly roll manufactured by stacking method;
FIG. 2 is a one-way perspective view showing a jelly roll winding unit for a secondary battery according to an embodiment of the present disclosure;
FIG. 3 is a different-way perspective view showing the jelly roll winding unit for a secondary battery according to FIG. 2;
FIG. 4 is a reference drawing for showing a main gripper part according to FIG. 2;
FIG. 5 is a reference drawing for showing an edge gripper part according to FIG. 2;
FIG. 6 is a reference drawing for showing a clamp part according to FIG. 2;
FIG. 7 is a reference drawing for showing a tension control part according to FIG. 2; and
FIGS. 8 to 14 are schematic views showing a jelly roll winding method for a secondary battery according to an embodiment of the present disclosure.

### DETAILED DESCRIPTION OF THE INVENTION

Hereinafter, embodiments of the present disclosure will be described in more detail with reference to the accompanying drawings. The embodiments of the present disclosure may be modified in various forms, and the scope of the present disclosure should not be construed as being limited to the following embodiments, but should be construed based on the matters described in the claims. In addition, these embodiments are only provided for reference in order to more completely explain the present disclosure to those of ordinary skill in the art.

As used herein, the singular form may include the plural form unless the context clearly indicates otherwise. In addition, as used herein, "comprise" and/or "comprising" specify the presence of the recited shapes, numbers, steps, operations, members, elements, and/or groups thereof, but do not exclude the presence or addition of one or more other shapes, numbers, steps, operations, members, elements, and/or groups thereof.

Hereinafter, it should be noted that when one component (or layer) is described as being disposed on another component (or layer), one component may be disposed directly on another component, or another component(s) or layer(s) may be located between the components. In addition, when one component is expressed as being directly disposed on or above another component, no other component(s) are located between the components. Moreover, being located on "top", "upper", "lower", "above", "below" or "one (first) side" or "side" of a component means a relative positional relationship.

In addition, below, there are instances where components are described as "first", "second", etc., by indicating numbers. In this case, it should be noted that the second component does not presuppose the first component, and each component is independent of the other.

Hereinafter, the description that one component and another component are "combined" or "connected" includes not only the components being directly combined/connected, but also the components being indirectly combined/connected by a third component.

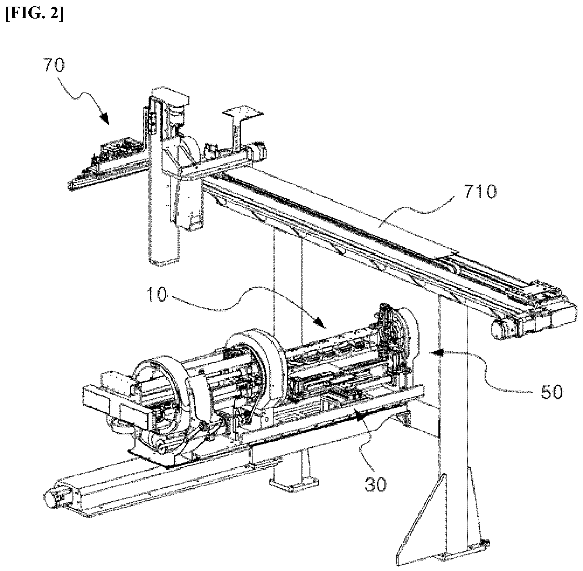

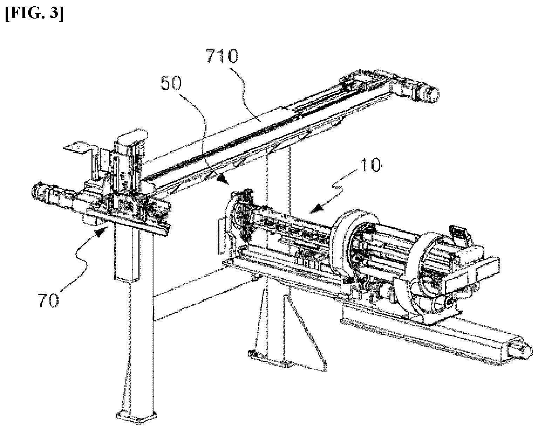

FIG. 2 is a one-way perspective view showing a jelly roll winding unit for a secondary battery according to an embodiment of the present disclosure, and FIG. 3 is a different-way perspective view showing the jelly roll winding unit for a secondary battery according to FIG. 2.

Hereinafter, a jelly roll winding unit 1 for a secondary battery according to an embodiment of the present disclosure will be described in detail with reference to the attached drawings.

The term "jelly roll J" below refers to a configuration in which a negative electrode plate A, a separator B, and a positive electrode plate C are cross-stacked and the outer surfaces thereof are wrapped by a separator B, and the jelly roll J may be finished by wrapping the jelly roll J with the separator B using the jelly roll winding unit 1 for a secondary battery according to an embodiment of the present disclosure, and a detailed description thereof will be provided later.

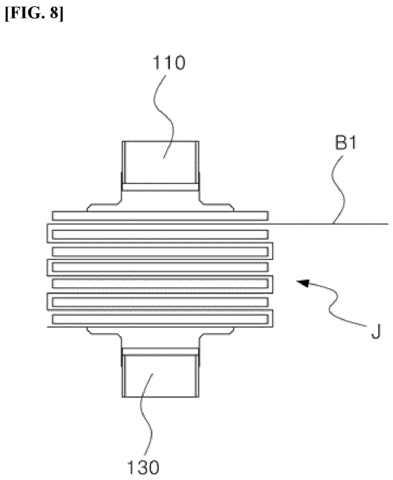

Referring to FIGS. 2 and 3, the present disclosure relates to the jelly roll winding unit 1 for a secondary battery and, more particularly, to the jelly roll winding unit 1 for a secondary battery that prevents sagging in the width direction by constantly supporting the bottom of a jelly roll J (see FIG. 8) during the work of wrapping the jelly roll J with a separator B and easily guides the folding line of the separator B as needed.

To this end, the jelly roll winding unit 1 for a secondary battery may include a main gripper part 10, an edge gripper 30, a clamp part 50, and a tension control part 70.

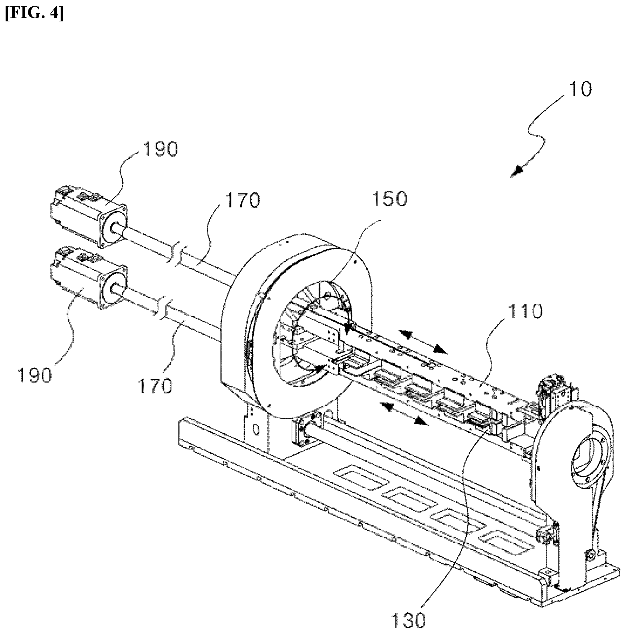

FIG. 4 is a reference drawing for showing a main gripper part according to FIG. 2.

Referring to FIGS. 2 to 4, the main gripper part 10 is configured to fix a jelly roll J by applying pressure to a pair of opposing surfaces of the jelly roll J being fed, thereby allowing the jelly roll J to rotate around the width axis.

For this purpose, the main gripper part 10 may include a first gripper 110, a second gripper 130, a first rotation member 150, a connection member 170, and a first driving device 190.

The first gripper 110 is configured to press a first side of the jelly roll J being fed, and may have, for example, a plate shape that extends long along the width direction of the jelly roll J. The term "width" above is understood to mean the width in the longitudinal direction of the jelly roll J. In addition, it should be noted that although a number of protrusions are formed spaced apart along the width W direction on one side of the first gripper 110, the protrusions are not essential components of the present disclosure.

The first gripper 110 may rotate with respect to the width direction together with the second gripper 130 while gripping the jelly roll J inserted therebetween. Thus, when the first gripper 110 and the second gripper 130 rotate 180°, the first gripper 110 may be placed below the second gripper 130, and the second gripper 130 may be placed above the first gripper 110. The rotation of the first gripper 110 and the second gripper 130 may be performed by the first rotation member 150. In addition, the first gripper 110 may be configured to be moved forward and backward along the width direction by the driving of the first driving device 190.

The second gripper 130 is configured to press a second side of the jelly roll J being fed, and may be formed in a shape substantially identical to that of the first gripper 110, and there is no particular limitation thereto. The second gripper 130 may also have a protrusion formed on one side thereof, or may not have a protrusion formed. The second gripper 130, like the first gripper 110, may be rotated based on the width direction by the first rotation member 150 and may be configured to move forward and backward along the width direction by the driving of the first driving device 190.

In this way, the gripper parts 110 and 130 are configured to be rotatable along the same direction, and during the process of wrapping a jelly roll J with a separator B, the gripper 110 or 130 located below the other gripper may constantly support the bottom of the jelly roll J along the width direction of the jelly roll J. Thus, the sagging of the jelly roll J may be prevented during the winding process.

The first rotation member 150 is configured to be connected to the first gripper 110 and the second gripper 130 and to rotate the first gripper 110 and the second gripper 130. The first rotation member 150 may be configured as a rotational bearing, for example, but the scope of the present disclosure is not limited thereto. By rotating the first gripper 110 and the second gripper 130 by means of the first rotation member 150, the relative up-down positions of the grippers 110 and 130 may be changed. The first rotation member 150 may rotate the grippers 110 and 130) by 180° for each rotational motion, but the scope of the present disclosure is not limited thereto.

The connection member 170 is a pair of components connected to the end sides of the first gripper 110 and the second gripper 130, and may be formed in a cylindrical shape, for example, but the scope of the present disclosure is not limited thereto. One end side of each of the connection members 170 is connected to each of the grippers 110 and 130, and the other end side of each of the connection members 170 is connected to each of the first driving devices 190, so that the grippers 110 and 130 may be moved forward and backward along the width direction by the operation of the first driving devices 190.

The first driving device 190 is configured to be connected to the end of the connection member 170, and may be formed as a pair so as to correspond one-to-one with the individual connection member 170. The first driving device 190 may be formed as a servo motor, but the scope of the present disclosure is not limited thereto.

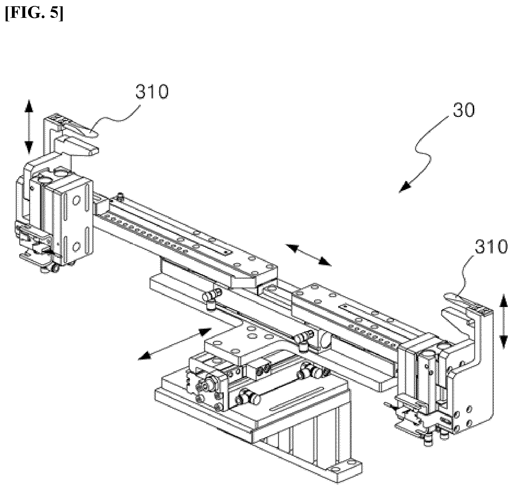

FIG. 5 is a reference drawing for showing an edge gripper part according to FIG. 2.

Referring to FIGS. 2, 3, and 5, the edge gripper 30 is configured to guide the folding line of a separator by gripping the edge side of a jelly roll J fixed by the main gripper part 10. The edge gripper 30 may have a pair of pressing parts 310 spaced apart from each other in the up-down direction. The edge gripper 30 is positioned so that the edge side of the jelly roll J is inserted between the pressing parts 310, and the edge side of the jelly roll J may be gripped by raising or lowering at least one of the pressing parts 310. In addition, the edge gripper 30 may be provided in a pair spaced apart from each other along the width direction so as to grip a pair of edge sides of a jelly roll J being fed.

In this way, when the work of wrapping the jelly roll J with a separator B is performed after both edge sides of the jelly roll J are gripped by the edge gripper 30, and the first gripper 110 and the second gripper 130 are rotated, the edge gripper 30 may guide the folding line of the separator B. To be specific, since the edge grippers 30 are spaced apart from each other, the separator B may be folded without interference of the edge grippers 30 within the gap space. Thus, due to the edge grippers 30, the jelly roll J being fed may maintain a correct posture without misalignment, and interference with the separator B may be minimized so that a folding line may be accurately formed in the separator. On the contrary, in the case that the edge grippers 30 are provided long along the width direction without the gap space, the edge grippers 30 interfere with the separator B along the width direction, causing the separator B to be lifted, so that the folding line cannot be formed accurately.

In addition, it is preferable that the edge gripper 30 be configured to be movable along one of the axial directions of the x-axis, the y-axis, and the z-axis, and it is more preferable that the edge gripper 30 be configured to be movable along all axial directions. The axial movement of the edge gripper 30 may be performed by utilizing a driving means such as a cylinder, for example, and there is no separate limitation thereto.

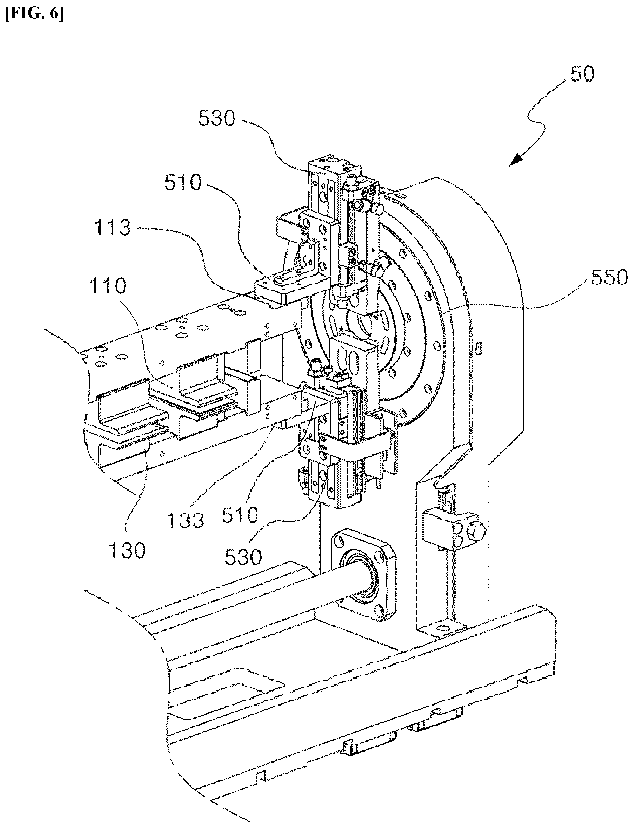

FIG. 6 is a reference drawing for showing a clamp part according to FIG. 2.

Referring to FIGS. 2, 3, and 6, the clamp part 50 is configured to support the end sides of the outer arm-shaped grippers 110 and 130 by being connected to the end sides of the first gripper 110 and the second gripper 130. In addition, the clamp part 50 may be configured to support the grippers 110 and 130 while allowing the grippers 110 and 130 to rotate. To this end, the clamp part 50 may include a support member 510, a second driving device 530, and a second rotation member 550.

The support member 510 is provided in a pair to support the end sides of the individual grippers 110 and 130. For example, the support member 510 may be respectively inserted into recessed parts 113 and 133 of the end sides of the individual grippers 110 and 130 to support the grippers 110 and 130, but the scope of the present disclosure is not limited thereto. In addition, the support members 510 may be configured to be connected to the second driving device 530 and to be able to move up and down. Thus, when the gripper 110 or 130 moves backward, the gripper 110 or 130 may move backward while the support member 510 is moved up. The above term "backward" should be understood to mean a widthwise movement (x-axis direction) of the gripper 110 or 130 away from the clamp part 50, and "forward" should be understood to mean a widthwise movement (x-axis direction) closer to the clamp part 50.

The second driving device 530 is configured to raise and lower the individual support members 510, and it is preferable that the second driving device 530 be provided as a pair so that the individual support members 510 may be raised and lowered independently. In addition, the second driving device 530 may have, for example, a cylinder configuration, but the scope of the present disclosure is not limited thereto.

The second rotation member 550 is configured to be connected to the support members 510 and to rotate the support members 510 combined with the individual grippers 110 and 130. The second rotation member 550 may be configured as a rotational bearing, for example, but the scope of the present disclosure is not limited thereto. By rotating the support members 510, the first gripper 110, and the second gripper 130 by means of the second rotation member 550, the relative up-down positions of the grippers 110 and 130 may be changed. The second rotation member 550 may rotate the grippers 110 and 130 with the first rotation member 150 described above.

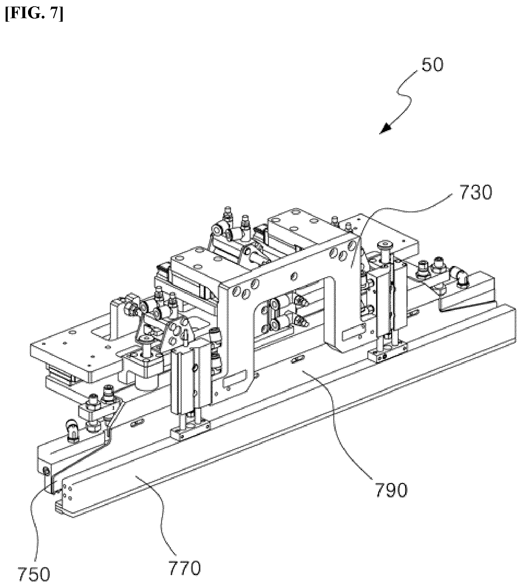

FIG. 7 is a reference drawing for showing a tension control part according to FIG. 2.

Referring to FIGS. 2, 3, and 7, the tension control part 70 is configured to control the tension of a separator B extending from a jelly roll J by moving along a direction (y-axis direction) orthogonal to the width direction on the horizontal plane while being separated from the main gripper part 10 and fixing one side of the separator B. When the tension control part 70 moves away from the main gripper part 10, the separator B may be kept in a tight state, and when the tension control part 70 moves closer to the main gripper part 10, the separator B may be kept in a loose state.

To this end, the tension control part 70 may include a movement guide part 710, a body part 730, a vacuum suction part 750, a pressing surface part 770, and a cutter 790.

Referring to FIGS. 2 and 3, the movement guide part 710 is configured to extend in the direction (y-axis direction) orthogonal to the width direction on the horizontal plane, and guide the movement of the body part 730 coupled with one side of the movement guide part 710 in the direction (y-axis direction) orthogonal to the width direction on the horizontal plane.

Referring to FIGS. 2, 3, and 7, the body part 730 is configured to be coupled to one side of the movement guide part 710, preferably coupled on the movement guide part 710, and to move in the y-axis direction. The vacuum suction part 750, the pressing surface part 770, and the cutter 790 may be coupled to the body part 730.

The vacuum suction part 750 is configured to be able to be raised and lowered and is configured to vacuum-suck the upper surface of a separator B being fed. To this end, one or more suction holes (not shown) may be formed on the lower surface of the vacuum suction part 750.

The pressing surface part 770 is configured to press the upper surface of a separator B being fed while being spaced apart from the vacuum suction part 750 in the direction (y-axis direction) orthogonal to the width direction on the horizontal plane. As the pressing surface part 770 presses two points on the upper surface of the separator B together with the vacuum suction part 750, precise cutting of the separator B by the cutter 790 described later may be achieved. The pressing surface part 770 may be configured to be raised and lowered.

The cutter 790 is configured to be positioned between the vacuum suction part 750 and the pressing surface part 770 and to be raised and lowered to cut a separator B being fed. The raising and lowering of the vacuum suction part 750, the pressing surface part 770, and the cutter 790 may be performed, for example, by means of a cylinder, but the scope of the present disclosure is not limited thereto.

FIGS. 8 to 14 are schematic views showing a jelly roll winding method for a secondary battery according to an embodiment of the present disclosure. FIGS. 8 to 14 schematically show the first and second grippers 110 and 130 and the edge gripper 30.

Hereinafter, a jelly roll winding method for a secondary battery according to an embodiment of the present disclosure will be described in detail with reference to the attached drawings. Hereinafter, among separators B, the separator that is not stacked on a negative electrode plate A or positive electrode plate C but extends outside a jelly roll J is referred to as an extension separator B1.

Referring to FIG. 8, first, a jelly roll J is fed into the main gripper part 10, the first gripper 110 and the second gripper 130 press and fix both sides of the jelly roll J that has been fed. At this time, the first gripper 110 presses the top of the jelly roll J and the second gripper 130 presses the bottom, as an example.

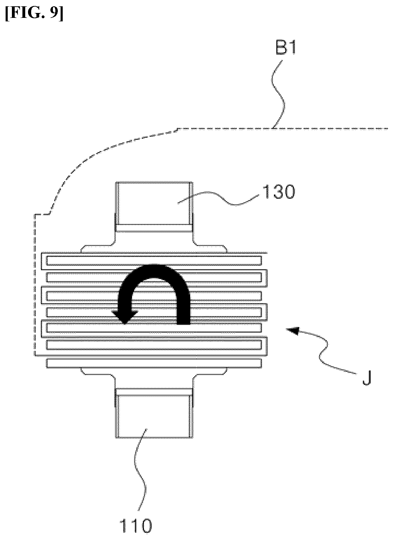

Referring to FIG. 9, the first gripper 110 and the second gripper 130 then rotate 180° by the driving of the first rotation member 150. As a result, the starting point of the extension separator B1 first located at the upper side of the jelly roll J is now located at the lower side of the jelly roll J. At this time, since the bottom of the jelly roll J is maintained in a state supported by the first gripper 110, sagging of the jelly roll J along the width direction may be prevented. At this time, the extension separator B1 may be maintained in a loose state.

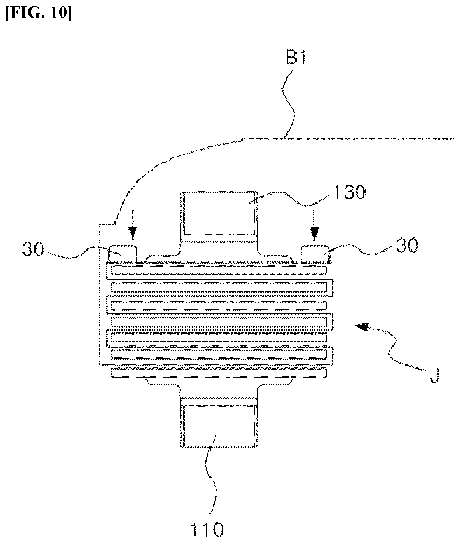

Referring to FIG. 10, the edge grippers 30 grip the edge sides of the jelly roll J fixed by the gripper part 10.

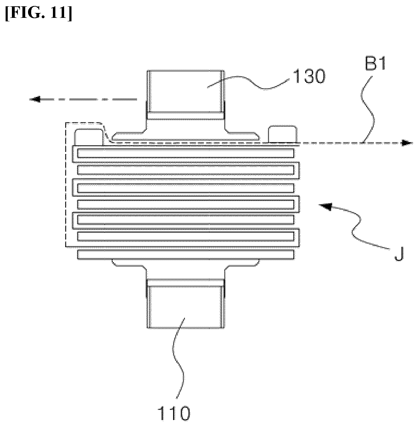

Thereafter, referring to FIG. 11, the second gripper 130 moves backwards by the driving of the first driving device 190.

When the second gripper 130 completes moving backwards, the tension control part 70 ensures that the extension separator B1 maintains a tight tension. For example, when the body part 730 of the tension control part 70 moves away from the main gripper part 10 by means of the movement guide part 710, the extension separator B1 may maintain a tight tension. With this movement, the extension separator B1 may wrap around the side and top of the jelly roll J. In addition, as previously described, the extension separator B1 between the pair of edge grippers 30 is not interfered by the edge grippers 30, so that a precise folding line may be created. Then, the edge grippers 30 release the grip of the jelly roll J.

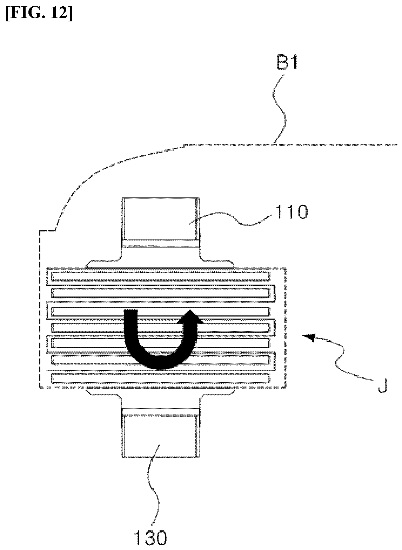

Thereafter, referring to FIG. 12, the second gripper 130 moves forwards by the driving of the first driving device 190 and presses the top of the jelly roll J whose top is wrapped by the extension separator B1. Then, the first gripper 110 and the second gripper 130 rotate 180° by the driving of the first rotation member 150. As a result, the extension separator B1 may wrap around the other side of the jelly roll J. At this time, the extension separator B1 is kept loose by the tension control part 70. In addition, since the bottom of the jelly roll J is kept supported by the second gripper 130, the jelly roll J may be prevented from sagging.

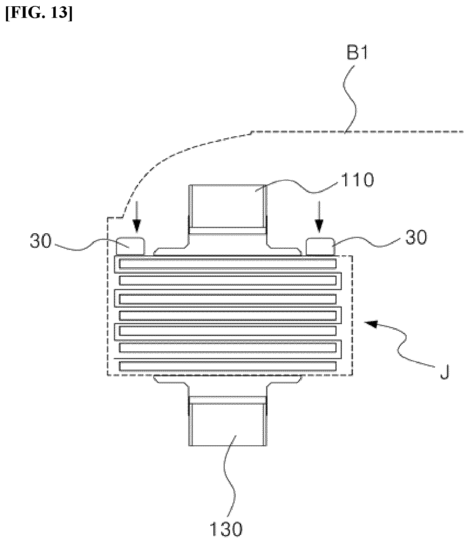

Thereafter, referring to FIG. 13, the edge grippers 30 re-grip the edge sides of the jelly roll J fixed by the gripper part 10.

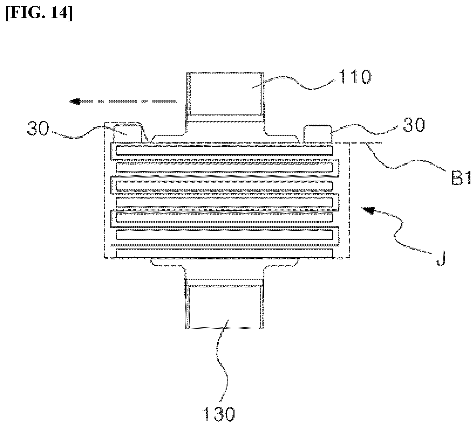

Referring to FIG. 14, the first gripper 110 then moves backwards by the driving of the first driving device 190.

When the first gripper 110 completes moving backwards, the tension control part 70 ensures that the extension separator B1 maintains a tight tension. For example, when the body part 730 of the tension control part 70 moves away from the main gripper part 10 by means of the movement guide part 710, the extension separator B1 may maintain a tight tension. With this movement, the extension separator B1 may wrap the remaining side and the surface facing the top of the jelly roll J wrapped by the separator B.

The above detailed description is illustrative of the present disclosure. In addition, the above description shows and describes preferred embodiments of the present disclosure, and the present disclosure can be used in various other combinations, modifications, and environments. That is, changes or modifications are possible within the scope of the concept of the present disclosure disclosed herein, the scope equivalent to the written disclosure, and/or within the scope of skill or knowledge in the art. The above-described embodiment describes the best state for implementing the technical idea of the present disclosure, and various changes required in the specific application field and use of the present disclosure are possible. Accordingly, the detailed description of the present disclosure is not intended to limit the present disclosure to the disclosed embodiments.

## Claims

1. A jelly roll winding unit for a secondary battery, the unit comprising:
a main gripper part configured to be rotatable while pressing opposite sides of a jelly roll being fed; and
an edge gripper configured to grip an edge side of the jelly roll fixed by the main gripper part,
wherein the main gripper part comprises:
a first gripper configured to press a first side of the jelly roll and to be able to move forward and backward along a width direction of the jelly roll; and
a second gripper configured to press a second side of the jelly roll and to be able to move forward and backward along the width direction of the jelly roll.

2. The unit of claim 1, wherein the main gripper part further comprises:
a first rotation member connected to the first gripper and the second gripper and configured to rotate the first gripper and the second gripper; and
a first driving device connected to the first gripper and the second gripper and configured to move the first gripper and/or the second gripper forward and backward in a width direction.

3. The unit of claim 1, wherein the jelly roll is constantly supported at a bottom thereof by the first gripper or the second gripper when a rotation is completed by the main gripper part.

4. The unit of claim 1, wherein the edge gripper grips an edge of the jelly roll after a rotational motion of the first gripper and the second gripper.

5. The unit of claim 1, wherein the edge gripper comprises:
a pair of pressing parts spaced apart from each other along a horizontal direction,
wherein the pressing parts grip edge sides of the jelly roll fixed by the main gripper part, and guide a folding line of a separator wrapping the jelly roll.

6. The unit of claim 1, wherein one of the first gripper and the second gripper moves outward from the jelly roll after the edge gripper grips the jellyroll.

7. The unit of claim 1, further comprising:
a clamp part connected to end sides of the first gripper and the second gripper and configured to support the first gripper and the second gripper.

8. The unit of claim 7, wherein the clamp part comprises:
a pair of support members supporting the end sides of the first gripper and the second gripper;
a second driving device configured to allow individual support members to be raised and lowered; and
a second rotation member configured to rotate the first gripper and the second gripper.

9. The unit of claim 1, further comprising:
a tension control part configured to control a tension of a separator extending from the jelly roll while being separated from the main gripper part and fixing a side of a separator.

10. The unit of claim 9, wherein the tension control part comprises:
a movement guide part configured to extend in a longitudinal direction orthogonal to the width direction on a horizontal plane, and guide a longitudinal movement of a body part;
the body part configured to move in the longitudinal direction by being combined with the movement guide part;
a vacuum suction part connected to the body part, and configured to be raised and lowered, and vacuum-suck an upper surface of a separator being fed; and
a cutter configured to cut the separator sucked by the vacuum suction part and to be raised and lowered.

11. The unit of claim 10, wherein the movement guide part guides the movement of the body part to control the tension of the separator.

12. The unit of claim 10, wherein the tension control part further comprises:
a pressing surface part configured to press an upper surface of a separator being fed while being spaced apart from the vacuum suction part,
wherein the cutter is disposed between the vacuum suction part and the pressing surface part.

13. A jelly roll winding method for a secondary battery using the jelly roll winding unit of claim 1, the method comprising:
pressing and fixing opposite sides of a jelly roll being fed using the first gripper located above and the second gripper located below;
rotating the first gripper and the second gripper;
gripping an edge side of the jelly roll using the edge gripper; and
moving the second gripper backward.

14. The method of claim 13, further comprising:
pressing and fixing, by the second gripper moving forward, an upper surface of the jelly roll, which is wrapped by an extension separator;
releasing, by the edge gripper, a grip on the jelly roll edge side;
rotating the first gripper and the second gripper; and
re-gripping, by the edge gripper, the edge side of the jelly roll.

15. The method of claim 14, further comprising:
moving the first gripper backward after re-gripping by the edge gripper.
